Europäisches Patentamt

European Patent Office

Office européen des brevets

(11) Veröffentlichungsnummer : **0 105 049**
**B1**

(12) **EUROPÄISCHE PATENTSCHRIFT**

(45) Veröffentlichungstag der Patentschrift :
22.01.86

(21) Anmeldenummer : **82109058.6**

(22) Anmeldetag : 30.09.82

(51) Int. Cl.⁴ : **H 02 M   3/335**

(54) Gleichspannungswandler mit einem impulsbreitengesteuerten Halbleiterschalter.

(43) Veröffentlichungstag der Anmeldung :
**11.04.84 Patentblatt 84/15**

(45) Bekanntmachung des Hinweises auf die Patenterteilung : **22.01.86 Patentblatt 86/04**

(84) Benannte Vertragsstaaten :
**DE FR GB IT**

(56) Entgegenhaltungen :
**EP-A- 0 008 539**
**EP-A- 0 026 870**
**GB-A- 1 276 895**

(73) Patentinhaber : **ANT Nachrichtentechnik GmbH**
**Gerberstrasse 33**
**D-7150 Backnang (DE)**

(72) Erfinder : **Grünsch, Eckhardt**
**Im Blütengarten 14**
**D-7151 Allmersbach i.T (DE)**

(74) Vertreter : **Wiechmann, Manfred, Dipl.-Ing.**
**ANT Nachrichtentechnik GmbH Gerberstrasse 33**
**D-7150 Backnang (DE)**

Jouve, 18, rue St-Denis, 75001 Paris, France

**Beschreibung**

Die Erfindung betrifft einen Gleichspannungs-sperrwandler mit einem pulsbreitengesteuerten Halbleiterschalter im Primärhauptstromkreis und einem mindestens drei Wicklungen aufweisenden Leistungstransformator, wobei die Primärwicklung des Leistungstransformators in Serie zu dem Halbleiterschalter liegt und wobei die Sekundärwicklung über mindestens ein Gleichrichterelement an einen Glättungskondensator im Sekundärhauptstromkreis angeschlossen ist. Ein solcher Gleichspannungswandler ist bekannt (Joachim Wüstehube, Schaltnetzteile, Expert Verlag 1979, Seite 410).

Schalttransistoren von taktgesteuerten Gleichspannungswandlern werden je nach Belastung durch den Lastwiderstand mit kurzen oder langen Einschaltimpulsen betrieben. Üblicherweise wird dazu in einem Regelkreis die integrierte Ausgangsspannung des Gleichspannungswandlers mit einer Referenzspannung verglichen und ein Regelsignal zur Steuerung eines Pulsbreitenmodulators abgeleitet. Durch die Integration der Ausgangsspannung, die zum störungsfreien Arbeiten des Gleichspannungswandlers erforderlich ist, kann der Gleichspannungswandler nur verzögert auf Laststromsprünge reagieren. Dies bewirkt, daß bei schnellen Laststromänderungen die Ausgangsspannung mehr oder weniger stark über- bzw. unterschwingt, was sich bei Gleichspannungswandlern mit kleinen Glättungskapazitäten besonders nachteilig auswirkt. Um Platz und Gewicht zu sparen, geht die Entwicklung von Gleichspannungswandlern hin zu höheren Schaltfrequenzen, die den Einsatz von kleinen Glättungskapazitäten, z. B. Folienkondensatoren ermöglichen, welche gegenüber den Aluminium-Elektrolyt-Kondensatoren den Vorteil einer längeren Lebensdauer besitzen. Herkömmliche Gleichspannungswandler können nur bedingt mit kleinen Glättungskapazitäten arbeiten und zwar nur dann, wenn keine bzw. nur kleine Laststromänderungen auftreten können.

Treten jedoch große Laststromsprünge auf, z. B. von maximaler Belastung zu völliger Entlastung (Leerlauf), so kann, selbst wenn der Schalttransistor sofort ausgeschaltet würde, nicht verhindert werden, daß die gespeicherte Energie des Leistungstransformators in den Glättungskondensator fließt, und dieser eine überhöhte Spannung annehmen kann.

Vorliegender Erfindung liegt daher die Aufgabe zugrunde, einen Gleichspannungs-Sperrwandler gemäß dem Oberbegriff des Patentanspruchs 1 so auszubilden, daß große sprungartige Lastwechsel auch bei hoher Schaltfrequenz des Wandlers nur geringe Ausgangsspannungsänderungen zur Folge haben.

Erfindungsgemäß wir diese Aufgabe durch die kennzeichnenden Merkmale des Patentanspruchs 1 gelöst.

In den abhängigen Ansprüchen sind vorteilhafte Weiterbildungen der Erfindung angegeben.

Bei der Erfindung ist das Verhalten bei sprungartigen Laständerungen gegenüber den herkömmlichen Gleichspannungswandlern wesentlich verbessert. Selbst bei einem Lastsprung von Vollast auf Leerlauf tritt kein Überschwingen der Ausgangsspannung auf, weil die überschüssige Energie im Glättungskondensator in den Kern des Leistungstransformators zurückfließen kann, und dort bis zur nächsten Energieaufnahmephase des Wandlers gespeichert bleibt. Durch die Rückspeisung der Energie im Glättungskondensator ist die Energieabgabezeit des Sekundärstromes verlängert. Beim einem Lastsprung von Vollast auf Leerlauf ändert sich die Energieabgabezeit nur ger'ngfügig. Daraus resultiert wiederum eine nur geringfügige Änderung der Ausgangsspannung. Die Regelverstärkung ist daher im Hinblick auf herkömmliche Gleichspannungswandler verbessert. Die geringere Regelverstärkung macht den Wandler stabiler gegen Regelschwingungen. Die erfindungsgemäße Energierückspeisung bringt bei mitlaufenden ungeregelten Sekundärausgangskreisen einen weiteren Vorteil. Dadurch daß die Zeitänderung zwischen Volllast und Leerlauf bei einem Lastsprung gering und die Zeit des Leerlaufzustandes relativ lang ist, ergibt sich eine länger wirksame Verkettung der Sekundärwicklung des geregelten Sekundärausgangskreises und den Sekundärwicklungen der ungeregelt mitlaufenden Sekundärausgangskreise. Gegenüber herkömmlichen mitlaufenden Sekundärausgangskreisen sind die Mitlaufeigenschaften verbessert.

Anhand der Zeichnungen wird die Erfindung nun näher beschrieben. Es zeigen :

Figur 1 einen Gleichspannungswandler mit Ansteuerung der Vergleichseinrichtung durch eine Strommeßeinrichtung,

Figur 2 Strom-Zeit-Diagramme für den Wandler gemäß Fig. 1,

Figur 3 einen Gleichspannungswandler mit Ansteuerung der Vergleichseinrichtung durch einen Sägezahngenerator und

Figur 4 einen Wandler mit mitlaufenden ungeregelten Sekundärausgangskreisen.

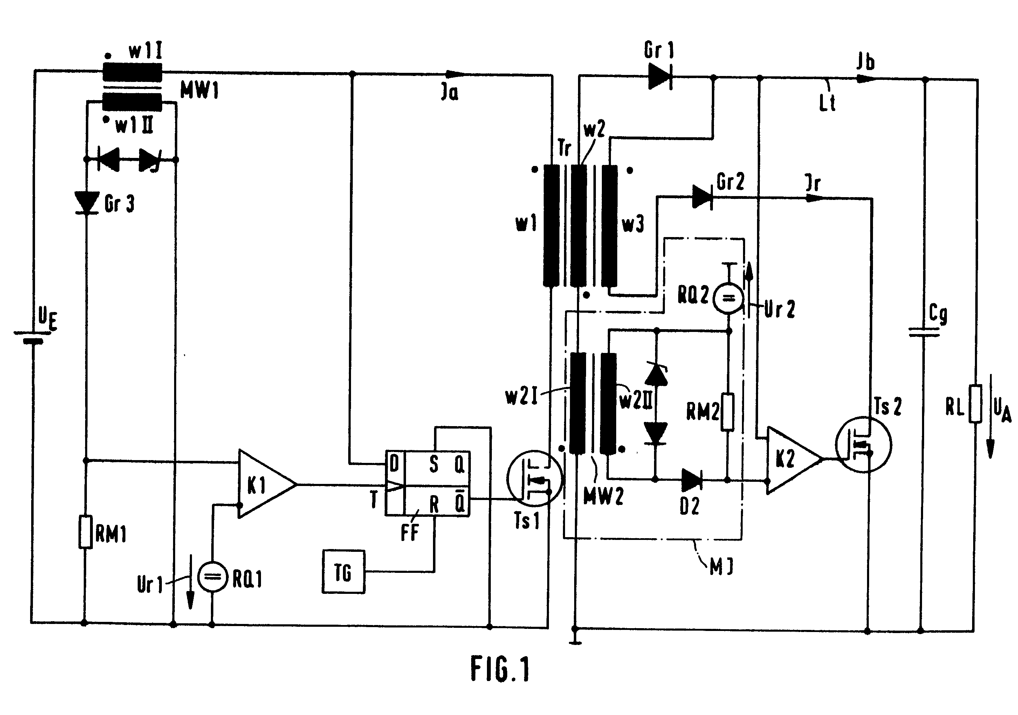

Fig. 1 zeigt eine Schaltungsanordnung eines Gleichspannungswandlers nach dem Sperrwandlerprinzip. Seine Speicherinduktivität zur Energieaufnahme und Energieabgabe während verschiedener Schaltphasen ist durch den Transformator Tr gegeben, der den Primärstromkreis galvanisch vom Sekundärstromkreis trennt. Die Versorgungsspannungsquelle $U_E$ liegt in Serie zur Primärwicklung w 1I eines ersten Strommeßwandlers MWI, der Primärwicklung w1 des energiespeichernden Transformators Tr und dem pulsbreitengesteuerten Halbleiterschalter-Schalttransistor Ts1. Die Sekundärwicklung w2 des Transformators Tr ist über ein Gleichrichterelement Gr1 mit dem Glättungskondensator Cg und dem Lastwiderstand RL verbunden.

Für die nun anschließenden Betrachtungen sei vorausgesetzt, daß ein eingeschwungener Zustand besteht.

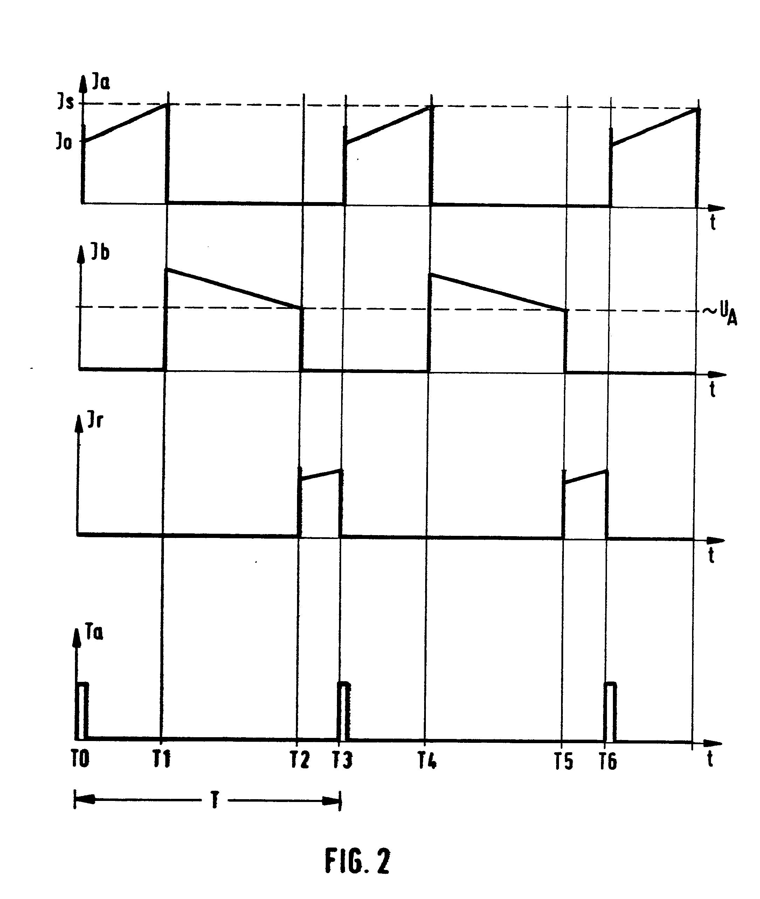

Der Taktgenerator TG gibt zum Zeitpunkt TO (vgl. Fig. 2) an den Rücksetzeingang R des positiv flankengesteuerten D-Flip-Flops FF einen kurzen Taktimpuls Ta ab. Der Ausgang $\overline{Q}$ des D-Flip-Flops führt dann keine Ausgangsspannung. Der Ausgang Q dagegen führt nun positive Ausgangsspannung und schaltet den Schalttransistor Ts1 ein. Von der Versorgungsspannungsquelle UE fließt ein Energieaufnahmestrom Ja über die Primärwicklung w1I des ersten Strommeßwandlers MW1 und die Primärwicklung w1 des Transformators Tr. Die Anfangshöhe Jo des Energieaufnahmestromes Ja ist durch die Gleichstromvormagnetisierung zum Zeitpunkt TO bestimmt. Die Gleichstromvormagnetisierung richtet sich nach der Eingangsspannung und der Belastung. Der Energieaufnahmestrom Ja steigt an, wobei sich die Anstiegssteilheit nach der Induktivität des Transformators Tr und der Eingangsspannung $U_E$ richtet. Mittels des Strommeßwandlers MW1 wird die Höhe des Energieaufnahmestroms Ja beim Ansteigen überwacht. Dazu ist die Sekundärwicklung w1II des Strommeßwandlers MW1 über einen Gleichrichter Gr3 mit einem Strommeßwiderstand RM1 verbunden. An diesem fällt eine zur Höhe des Energieaufnahmestromes Ja proportionale Spannung ab. Ein Komparator K1 vergleicht die am Strommeßwiderstand RM1 abfallende Spannung mit der Referenzspannung Ur1 einer Referenzspannungsquelle RQ1. Liegt die am Strommeßwiderstand RM1 abfallende Spannung unter der Referenzspannung Ur1, bleibt der Schalttransistor Ts1 eingeschaltet, da der Komparatorausgang von K1 keine Ausgangsspannung führt. Zum Zeitpunkt T1 erreicht der Energieaufnahmestrom Ja den Wert Js (vgl. Fig. 2). Wird dieser vorbestimmbare Höchstwert Js, dessen Höhe sich nach der entnehmbaren Leistung des Wandlers richtet, erreicht, soll die Energieaufnahme beendet werden. Die am Strommeßwiderstand RM1 abfallende Spannung übersteigt zum Zeitpunkt T1 die Referenzspannung Ur1. Der Ausgang des Komparators K1 nimmt nun positives Potential an, welches zum Takteingang T des D-Flip-Flops FF weitergeleitet wird. Der Ausgang Q des D-Flip-Flops springt von positivem Potential auf Nullpotential. Der Schalttransistor Ts1 wird dadurch abgeschaltet. Da nun kein Energieaufnahmestrom Ja mehr fließt, fällt am Strommeßwiderstand RM1 keine Spannung mehr ab. Der Ausgang des Komparators K1 springt von positivem Potential auf Nullpotential zurück. Das Flip-Flop FF hält aber den Schalttransistor Ts1 weiterhin so lange im ausgeschalteten Zustand, bis zum Beginn der neuen Taktperiode zum Zeitpunkt T3 · ein Taktimpuls Ta des Taktgenerators TG das Flip-Flop FF wieder zurücksetzt. Die Energieaufnahme beginnt dann von neuem.

Zum Zeitpunkt T1 (Beendigung der Energieaufnahme) wird der Schalttransistor Ts1 gesperrt. Es fließt nun ein Energieabgabestrom Jb von der Sekundärwicklung w2 des Transformators Tr über das Gleichrichterelement Gr1, den Glättungskondensator Cg, bzw. den Lastwiderstrand RL, und über die Primärwicklung w2I des Strommeßwandlers MW2 zurück zur Sekundärwicklung w2. Der fließende Energieabgabestrom Jb wird mittels Strommeßwandler MW2 auf die Sekundärwicklung w2II transformiert und erzeugt nach Gleichrichtung an dem Gleichrichterelement D2 einen Spannungsabfall am Meßwiderstand RM2, der der Ausgangsspannung $U_A$ am Lastwiderstand RL proportional ist. Zum Spannungsabfall am Meßwiderstand RM2 liegt die Referenzspannung Ur2 der Referenzspannungsquelle RQ2 in Reihe am invertierenden Eingang des Komparators K2. Der nichtinvertierende Eingang des Komparators K2 ist auf das Potential der Ausgangsspannung $U_A$ gelegt. Die Summe aus dem Spannungsabfall an RM2 und der Referenzspannung Ur2 übersteigt die Ausgangsspannung $U_A$. Am Ausgang des Komparators erscheint daher Nullpotential und der weitere elektronische Schalter Ts2, übrigens wie der Schalttransistor Ts1 ein MOS-Feldeffekt Leistungstransistor, ist gesperrt.

Der Energieabgabestrom Jb fließt auf den Lastwiderstand RL und würde wie bei einem herkömmlichen Gleichspannungswandler mit fallender Kennlinie bedingt durch die Induktivität des Transformators Tr so lange weiterfließen, bis ein neuer Taktimpuls des Taktgenerators TG zum Zeitpunkt T3 die Energieabgabe beenden würde. Beim erfindungsgemäßen Gleichspannungswandler jedoch wird der Energieabgabestrom Jb früher beendet und zwar im Zeitpunkt T2. Der Zeitpunkt T2 richtet sich nach der Ausgangsspannung $U_A$ und gibt den Schnittpunkt an, bei dem die aus dem Energieabgabestrom Jb abgeleitete Spannung die Ausgangsspannung $U_A$ unterschreitet. In diesem Falle unterschreitet die Summe aus der Referenzspannung Ur2 und der am Strommeßwiderstand RM2 abfallenden Spannung genau den Wert der Ausgangsspannung $U_A$. Da der langsame Abfall des Energieabgabestromes — negative Steigung der Stromkennlinie Jb ab T1 — aber belastungsunabhängig ist, wird der Zeitpunkt T2 allein durch die Höhe der Ausgangsspannung $U_A$ bestimmt. Bei ausgangsseitiger Entlastung steigt $U_A$ an, d. h., der Zeitpunkt T2 wird früher erreicht. Am Ausgang des Komparators K2 erfolgt zum Zeitpunkt T2 ein Sprung von Nullpotential auf positives Potential und der elektronische Schalter Ts2 wird leitend gesteuert. Der Energieabgabestrom ist beendet und es fließt nun nur noch ein Energierückspeisestrom Jr vom Glättungskondensator Cg über die Tertiärwicklung w3 des Transformators Tr, das Gleichrichterelement Gr2, die Schaltstrecke des Schalttransistors Ts2 zurück zum Glättungskondensator Cg. Der Energierückspeisestrom Jr führt die überschüssige Energie des Glättungskondensators Cg zurück in den Transformatorkern während der Zeit zwischen einer sekundärseitigen Energieabgabephase beispielsweise zum Zeitpunkt T2, und der nächsten Energieaufnahmephase, beispielsweise zum Zeitpunkt T3.

Bei einem Lastsprung von Volllast auf Leerlauf ist die Zeitänderung der Energieabgabe im Zeitintervall T1-T2 gering. Es ergibt sich daher auch nur eine geringfügige Änderung der Ausgangsspannung $U_A$. Aufgrund dieser Tatsache ist es möglich für den Meßwiderstand RM2 einen hohen Wert zu wählen. Die Regelverstärkung ist dann geringer und der Gleichspannungswandler ist stabiler gegen Regelschwingungen.

Zum Zeitpunkt T3, dem Beginn einer neuen Periode, endet der Rückspeisestrom Jr. Es wird nun wieder die Energieaufnahmephase des Gleichspannungswandlers eingeleitet. Dies geschieht durch Abgabe eines Taktimpulses Ta (vgl. Fig. 2) vom Taktgenerator TG an den Rücksetzeingang R des Flip-Flops FF.

Die in Fig. 2 dargestellten Impulsnadeln an den Anstiegsflanken der Ströme Ja und Jr rühren von den Ausräumströmen der Gleichrichter her.

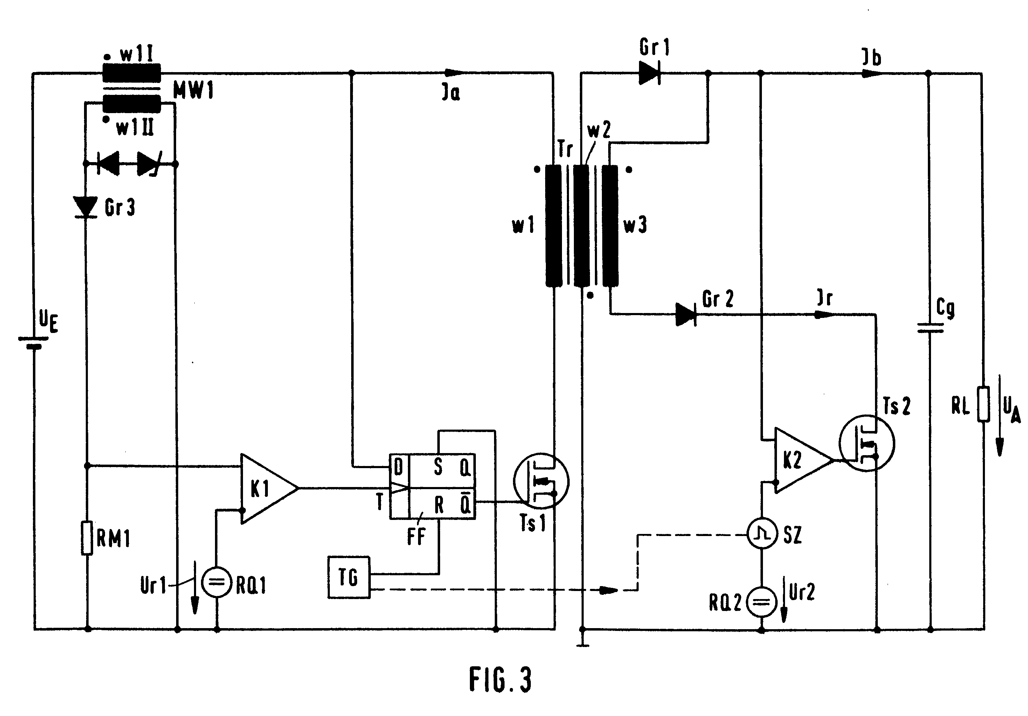

Fig. 3 zeigt ein anderes Ausführungsbeispiel eines erfindungsgemäßen Gleichspannungswandlers. Dieser Gleichspannungswandler weist anstelle des Strommeßwandlers MW2 mit Strommeßwiderstand RM2 einen Sägezahngenerator SZ auf, welcher vom Taktgenerator TG synchronisiert wird. Die Energieaufnahme läuft entsprechend zum in Fig. 1 dargestellten Gleichspannungswandler ab. Der Sägezahngenerator SZ wird durch einen Taktimpuls Ta des Taktgenerators TG gestartet (gestrichelte Linie in Fig. 3). Die Sägezahnspannung des Sägezahngenerators SZ nimmt von einem hohen Anfangswert aus langsam ab. Ab dem Zeitpunkt T1 fließt wie beim Ausführungsbeispiel nach Fig. 1 der Energieabgabestrom Jb. Unterschreitet die Summe aus der Referenzspannung Ur2 und dem überlagerten, langsam abfallenden Sägezahnsignal die Ausgangsspannung $U_A$, ändert der Ausgang des Komparators K2 sein Potential von Nullpotential auf positives Potential. Der elektronische Schalter Ts2 wird leitend und es fließt ein Rückspeisestrom Jr-Energieaufnahmestrom für den Kern des Transformators Tr. Die in Fig. 2 gezeigten Stromverläufe treffen auch auf das Ausführungsbeispiel nach Fig. 3 zu. Wie beim Ausführungsbeispiel nach Fig. 1 hängt der Zeitpunkt T2 des Einsetzens des Rückspeisestroms Jr von der Höhe der Ausgangsspannung $U_A$ ab. Je nach Belastung oder Entlastung des Ausgangs tritt dieser Zeitpunkt früher oder später ein.

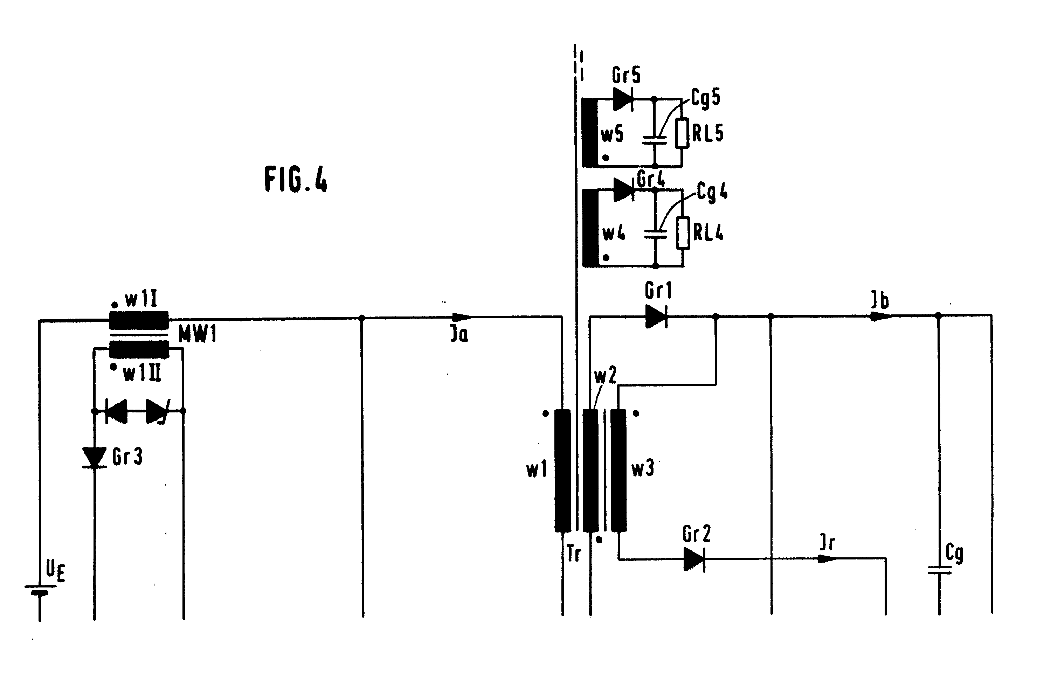

Der Wandler nach Fig. 4 ist wie der Wandler nach Fig. 1 aufgebaut. Nur weist sein Transformator Tr weitere Wicklungen w4, w5, ... auf, die zusammen mit dem Gleichrichterelement Gr4, bzw. Gr5 und den entsprechenden Glättungskondensatoren Cg4, und Cg5 sowie Lastwiderständen RL4 und RL5 jeweils einen mitlaufenden ungeregelten Sekundärausgangskreis bilden.

Durch die erfindungsgemäße Rückspeisung der überschüssigen Energie des Glättungskondensators Cg des geregelten Ausgangs ergeben sich verbesserte Mitlaufeigenschaften der mitlaufenden ungeregelten Sekundärausgangskreise.

Bei einem Lastsprung von Vollast und Leerlauf ist die Zeitänderung für den Engergieabgabestrom Jb gering. Da letzterer über den Strommeßwiderstand RM2 mit der Ausgangsspannung $U_A$ verkettet ist, ist auch die Änderung der Ausgangsspannung $U_A$ nur geringfügig. Die Zeit zwischen T1 und T2, also die Dauer der Energieabgabephase während der Energieabgabestrom Jb fließt, ist auch bei Leerlauf relativ lang. Die Wicklungen w4 und w5 der mitlaufenden ungeregelten Ausgangskreise sind dadurch länger mit dem geregelten Sekundärkreis verkettet, was zu besseren Mitlaufeigenschaften der ungeregelten Ausgangskreise führt.

**Patentansprüche**

1. Gleichspannungs-Sperrwandler mit einem pulsbreitengesteuerten Halbleiterschalter (Ts1) im Primärhauptstromkreis und einem mindestens drei Wicklungen aufweisenden Leistungstransformator (Tr), wobei die Primärwicklung (w1) des Leistungstransformators in Serie zu dem Halbleiterschalter (Ts1) liegt und wobei die Sekundärwicklung (w2) über mindestens ein Gleichrichterelement (Gr1) an einen Glättungskondensator (Cg) im Sekundärhauptskromkreis angeschlossen ist, dadurch gekennzeichnet, daß die Tertiärwicklung (w3) des Leistungstransformators (Tr) über einen weiteren Halbleiterschalter (Ts2) derart mit dem Glättungskondensator (Cg) im Sekundärhauptstromkreis verbunden ist, daß im Anschluß an die Energieabgabephase des Gleichspannungs-Sperrwandlers bis zur nächsten Energieaufnahmephase die überschüssige Energie des Glättungskondensators (Cg) in den Kern des Leistungstransformators (Tr) zurückgespeist wird.

2. Gleichspannungs-Sperrwandler nach Patentanspruch 1, dadurch gekennzeichnet, daß der gemeinsame Verbindungspunkt zwischen dem sekundärseitigen Gleichrichterelement (Gr1) und dem Glättungskondensator (Cg) mit dem ersten Wicklungsende der Tertiärwicklung (w3) des Leistungstransformators (Tr) verbunden ist, daß das zweite Wicklungsende der Tertiärwicklung (w3) des Leistungstransformators (Tr) über ein in Stromflußrichtung für den Rückspeisestrom vom Glättungskondensator (Cg) auf die Tertiärwicklung (w3) geschaltetes weiteres Gleichrichterelement (Gr2) und über den weiteren Halbleiterschalter (Ts2) mit der dem sekundärseitigen Gleichrichterelement (Gr1) abgewandten Elektrode des Glättungskondensators (Cg) verbunden ist, daß die Steuerelektrode des weiteren Halbleiterschalters (Ts2) mit dem Ausgang einer Vergleichseinrichtung (K2) verbunden ist und daß die Vergleichseinrichtung (K2) derart mit einer ausgangsspannungsführenden Klemme des Wandlers, einer Referenzspannungsquelle (RQ2) und einem taktsynchronisierten Sägezahngenerator (SZ) verbunden ist, daß sie einen Einschaltbefehl für den weiteren Halbleiterschalter (Ts2) abgibt, wenn der Momentanwert des Ausgangssignals von Referenzspannungsquelle und Sägezahngenerator (SZ) den Momentanwert der Ausgangsspannung ($U_A$) des Wandlers unterschreitet (Fig. 3).

3. Gleichspannungs-Sperrwandler nach Anspruch 1, dadurch gekennzeichnet, daß der gemeinsame Verbindungspunkt zwischen dem sekundärseitigen Gleichrichterelement (Gr1) und dem Glättungskondensator (Cg) mit dem ersten Wicklungsende der Tertiärwicklung (w3) des Leistungstransformators (Tr) verbunden ist, daß das zweite Wicklungsende der Tertiärwicklung (w3) des Leistungstransformators (Tr) über ein in Stromflußrichtung für den Rückspeisestrom vom Glättungskondensator (Cg) auf die Tertiärwicklung (w3) geschaltetes weiteres Gleichrichterelement (Gr2) und über den weiteren Halbleiterschalter (Ts2) mit der dem sekundärseitigen Gleichrichterelement (Gr1) abgewandten Elektrode des Glättungskondensators (Cg) verbunden ist, daß die Steuerelektrode des weiteren Halbleiterschalters (Ts2) mit dem Ausgang einer Vergleichseinrichtung (K2) verbunden ist und daß die Vergleichseinrichtung (K2) derart mit einer ausgangsspannungsführenden Klemme des Wandlers, einer Referenzspannungsquelle und einer Strommeßeinrichtung (MJ) für den sekundärseitigen Energieabgabestrom (Jb) verbunden ist, daß sie einen Einschaltbefehl für den weiteren Halbleiterschalter (Ts2) abgibt, wenn eine aus der Referenzspannung (Ur2) und dem sekundärseitigen Energieabgabestrom (Jb) abgeleitete Spannung den Momentanwert der Ausgangsspannung ($U_A$) unterschreitet (Fig. 1).

4. Gleichspannungs-Sperrwandler nach einem der Ansprüche 1 bis 3, dadurch gekennzeichnet, daß der Transformator (Tr) weitere Wicklungen (w4, w5, ...) aufweist, denen mitlaufende nichtgeregelte Sekundärausgangskreise zugeordnet sind.

**Claims**

1. Direct voltage converter with a pulse-width-controlled semi-conductor switch (Ts1) in the main primary current circuit and a power transformer (Tr) displaying at least three windings, wherein the primary winding (w1) of the power transformer lies in series with the semiconductor switch (Ts1) and wherein the secondary winding (w2) is connected through at least one rectifier element (Gr1) to a smoothing capacitor (Cg) in the main secondary current circuit, characterised thereby, that the tertiary winding (w3) of the power transformer (Tr) is connected through a further semiconductor switch (Ts2) with the smoothing capacitor (Cg) in the main secondary current circuit in such a manner that, following the energy delivery phase of the direct voltage converter until the next energy reception phase, the excess energy of the smoothing capacitor (Cg) is fed back into the core of the power transformer (Tr).

2. Direct voltage converter according to patent claim 1, characterised thereby, that the common junction between the rectifier element (Gr1) at the secondary side and the smoothing capacitor (Cg) is connected with the first winding end of the tertiary winding (w3) of the power transformer (Tr), that the second winding end of the tertiary winding (w3) of the power transformer (Tr) is connected through a further rectifier element (Gr2), which is connected in current flow direction for the return feed current from the smoothing capacitor (Cg) to the tertiary winding (w3), and through the further semiconductor switch (Ts2) with that electrode of the smoothing capacitor (Cg), which is remote from the rectifier element (Gr1) at the secondary side, that the control electrode of the further semiconductor switch (Ts2) is connected with the output of a comparator equipment (K2) and that the comparator equipment (K2) is connected in such a manner with an output-voltage-conducting terminal of the converter, a reference voltage source (RQ2) and a pulse-synchronised sawtooth generator (SZ) that it emits a switch-on command for the further semiconductor switch (Ts2) when the instantaneous value of the output signal of reference voltage source and sawtooth generator (Sz) falls below the instantaneous value of the output voltage ($U_A$) of the converter (Fig. 3).

3. Direct voltage converter according to claim 1, characterised thereby, that the common junction between the rectifier element (Gr1) at the secondary side and the smoothing capacitor (Cg) is connected with the first winding end of the tertiary winding (w3) of the power transformer (Tr), that the second winding end of the tertiary winding (w3) of the power transformer (Tr) is connected through a further rectifier element (Gr2), which is connected in current flow direction for the return feed current from the smoothing capacitor (Cg) to the tertiary winding (w3), and through the further semiconductor switch (Ts2) with that electrode of the smoothing capacitor (Cg), which is remote from the rectifier element (Gr1) at the secondary side, that the control electrode of the further semiconductor switch (Ts2) is connected with the output of a comparator equipement (K2) and that the comparator equipment (K2) is connected in such a manner with an output-voltage-conducting terminal of the converter, a reference voltage source and a current-measuring equipment (MJ) for the energy delivery curent (Jb) at the secondary side that it emits a switch-on command for the further semiconductor switch (Ts2) when a voltage derived from the reference voltage source (ur2) and the energy delivery current (Jb) at the secondary side falls below the instantaneous value of the output voltage ($U_A$) (Fig. 1).

4. Direct voltage converter according to one of the claims 1 to 3, characterised thereby, that the transformer (Tr) displays further windings (w4, w5, -..), which are associated with co-running unregulated secondary output circuits.

## Revendications

1. Convertisseur continu-continu inverseur à transformateur, avec un interrupteur à semiconducteurs (Ts1) commandé par durée d'impulsions dans le circuit principal primaire et un transformateur de puissance (Tr) comportant trois enroulements au moins, l'enroulement primaire (w1) étant en série avec l'interrupteur à semiconducteurs (Ts1) et l'enroulement secondaire (w2) étant relié par au moins un élément redresseur Gr1 au condensateur de lissage (Cg) dans le circuit principal secondaire, ledit convertisseur étant caractérisé en ce que l'enroulement tertiaire (w3) du transformateur de puissance (Tr) est relié par un second interrupteur à semiconducteurs (Ts2) au condensateur de lissage (Cg) dans le circuit principal secondaire de façon que l'énergie en excès du condensateur de lissage (Cg) soit renvoyée dans le noyau du transformateur de puissance (Tr) après la phase de fourniture d'énergie du convertisseur continu-continu inverseur à transformateur et jusqu'à la phase suivante d'absorption d'énergie.

2. Convertisseur continu-continu inverseur à transformateur selon revendication 1, caractérisé en ce que le point de connexion commun à l'élément redresseur (Gr1) du secondaire et au condensateur de lissage (Cg) est relié à la première extrémité de l'enroulement tertiaire (w3) du transformateur de puissance (Tr) ; la seconde extrémité de l'enroulement tertiaire du transformateur de puissance (Tr) est reliée à l'armature du condensateur de lissage (Cg) opposée à l'élément redresseur (Gr1) du secondaire par un second élément redresseur (Gr2), branché dans le sens passant du courant de récupération entre le condensateur de lissage (g) et l'enroulement tertiaire (w3), et par le second interrupteur à semiconducteurs (Ts2) ; l'électrode de commande du second interrupteur à semiconducteurs (Ts2) est reliée à la sortie d'un comparateur (K2) ; et le comparateur (K2) est relié à une borne du convertisseur délivrant la tension de sortie, à une source de tension de référence (RQ2) et à un générateur de dents de scie (SZ) synchronisé par une horloge, de façon à délivrer une instruction de fermeture du second interrupteur à semiconducteurs (Ts2) quand la valeur intantanée du signal de sortie de la source de tension de référence et du générateur de dents de scie (SZ) est inférieure à la valeur instantanée de la tension de sortie ($U_A$) du convertisseur (figure 3).

3. Convertisseur continu-continu inverseur à transformateur selon revendication caractérisé en ce que le point de connexion commun à l'élément redresseur (Gr1) du secondaire et au condensateur de lissage (Tg) est relié à la première extrémité de l'enroulement tertiaire (w3) du transformateur de puissance (Tr) ; la seconde extrémité de l'enroulement tertiaire (w3) du transformateur de puissance (Tr) est reliée à l'armature du condensateur de lissage (Cg) opposée à l'élément redresseur (Gr1) du secondaire par un second élément redresseur (Gr2), branché dans le sens passant du courant de récupération entre le condensateur de lissage (Cg) et l'enroulement tertiaire (w3), et par le second interrupteur à semiconducteurs (Ts2) ; l'électrode de commande du second interrupteur à semiconducteurs (Ts2) est reliée à la sortie d'un comparateur (K2) ; et le comparateur (K2) est relié à une borne du convertisseur délivrant la tension de sortie, une source de tension de référence et un dispositif de mesure (MJ) du courant de fourniture d'énergie au secondaire (Jb), de façon à délivrer une instruction de fermeture au second interrupteur à semiconducteurs (Ts2) quand une tension dérivée de la tension de référence (Ur2) et du courant de fourniture d'énergie au secondaire (Jb) est inférieure à la valeur instantanée de la tension de sortie ($U_A$) (figure 1).

4. Convertisseur continu-continu inverseur à transformateur selon une quelconque des revendications 1 à 3, caractérisé en ce que le transformateur (Tr) comporte d'autres enroulements (w4, w5 ...) auxquels sont affectés des circuits secondaires de sortie synchrones et non réglés.

FIG.1

FIG. 2

FIG. 3

0 105 049

FIG. 4